# EUROPEAN PATENT APPLICATION

(11) **EP 4 516 551 A2**
(43) Date of publication of application: **05.03.2025**
(21) Application number: 24197541.6
(22) Date of filing: 30.08.2024
(51) Int. Cl.: B60K 11/06, B60K 11/08, B60K 1/00, B60K 1/04

(54) **WORK VEHICLE**

(30) Priority: 04.09.2023 JP 2023143172
(71) Applicant: Kubota Corporation, Osaka-shi, Osaka 556-8601 (JP)
(72) Inventor: MIYAKE, Yuichi, SAKAI-SHI, OSAKA, 5900908 (JP)
(74) Representative: Cabinet Beau de Loménie

(57) **Abstract**

A work vehicle includes a pipe-shaped frame (15) provided in a body along a right-left direction and having a vent hole (15e) on at least either of a right portion and a left portion of the pipe-shaped frame (15). The work vehicle has a communicating opening (15f) provided in an intermediate portion of the pipe-shaped frame (15) in the right-left direction and allowing a cooling fan (36) and a cooling object (32) to communicate with an inside of the pipe-shaped frame (15). The cooling fan (36) is configured to cause air to be supplied to the cooling object (32) or discharged from the cooling object (32) through the vent hole (15e), the pipe-shaped frame (15), and the communicating opening (15f).

## Description

### BACKGROUND OF THE INVENTION

### 1. Field of the Invention

The present invention relates to a configuration for cooling a cooling object in a work vehicle.

### 2. Description of the Related Art

As described in Patent Literature 1 (JP 2023-95634A), a work vehicle includes a cooling fan for a cooling object (a radiator, an oil cooler, a battery, an inverter, or the like). Hereby, the cooling fan supplies external air to the cooling object and discharges the air cooling the cooling object from the cooling object.

### SUMMARY OF THE INVENTION

In a case where the air cooling the cooling object is discharged from the cooling object, the air cooling the cooling object might enter a course for the external air to be supplied to the cooling object and might be supplied to the cooling object again. When such a situation occurs, the cooling efficiency of the cooling object decreases. In view of this, there is room for improvement.

An object of the present invention is to prevent air cooling a cooling object in a work vehicle from being supplied again to the cooling object in a case where a cooling fan is provided for the cooling object.

### Solution to Problem

A work vehicle of the present invention includes: a body; a travel device included in the body; a boarding section provided in the body; a cooling object; a cooling fan; a pipe-shaped frame provided in the body along a right-left direction and having a vent hole on at least either of a right portion and a left portion of the pipe-shaped frame; and a communicating opening provided in an intermediate portion of the pipe-shaped frame in the right-left direction and allowing the cooling fan and the cooling object to communicate with an inside of the pipe-shaped frame. The cooling fan is configured to cause air to be supplied to the cooling object or discharged from the cooling object through the vent hole, the pipe-shaped frame, and the communicating opening.

In the present invention, in a case where the cooling fan causes external air to enter the pipe-shaped frame via the vent hole of the pipe-shaped frame, to be supplied to the cooling object through the pipe-shaped frame and the communicating opening, and to be discharged from the cooling object, it is necessary for the air cooling the cooling object to move from the cooling object to the vent hole of the pipe-shaped frame in order that the air cooling the cooling object is supplied to the cooling object again.

In a case where the cooling fan causes the external air to be supplied to the cooling object, to enter the pipe-shaped frame from the cooling object through the communicating opening, and to be discharged from the vent hole through the pipe-shaped frame, it is necessary for the air cooling the cooling object to move from the vent hole of the pipe-shaped frame to the cooling object in order that the air cooling the cooling object is supplied to the cooling object again.

In the present invention, the pipe-shaped frame is provided in the body along the right-left direction, and the vent hold is provided on the right portion (the left portion) of the pipe-shaped frame, and thus, the vent hole of the pipe-shaped frame is sufficiently distanced from the cooling object.

Accordingly, it is difficult for the air cooling the cooling object to move from the cooling object to the vent hole of the pipe-shaped frame (from the vent hole of the pipe-shaped frame to the cooling object). Even when the air cooling the cooling object moves from the cooling object to the vent hole of the pipe-shaped frame (from the vent hole of the pipe-shaped frame to the cooling object), it takes time for the movement, so that the temperature of the air cooling the cooling object during the movement decreases to be the same temperature as the external air.

In this case, the pipe-shaped frame provided in the body along the right-left direction can be selected to be used from among many existing frames provided in the body.

As such, it is possible to prevent the air cooling the cooling object from being supplied to the cooling object again, thereby making it possible to improve the cooling efficiency of the cooling object.

By selecting and using the pipe-shaped frame provided in the body along the right-left direction from among many existing frames provided in the body, it is possible to achieve a configuration that can prevent the air cooling the cooling object from being supplied to the cooling object again, thereby making it possible to achieve a simple structure.

In the present invention, it is preferable that: the body is provided with right and left body frames provided along a front-rear direction, and a plurality of lateral frames provided along the right-left direction and connected to the right and left body frames; and the pipe-shaped frame be one of the lateral frames.

In the present invention, the right and left body frames and the plurality of lateral frames constitute part of the body. Since the pipe-shaped frame is one of the lateral frames, and the pipe-shaped frame can be achieved by using part of the body, this is advantageous for simplification of the structure.

In the present invention, it is preferable that: the body frames each include a first frame portion placed below the boarding section, a second frame portion extending upward from a rear portion of the first frame portion, and a third frame portion extending rearward from an upper portion of the second frame portion; the travel device be provided behind the second frame portion and below the third frame portion, as viewed laterally; and the pipe-shaped frame be connected to the upper portion of the second frame portion and a front portion of the third frame portion.

In the work vehicle, the body frame includes the first frame portion, the second frame portion extending upward from the rear portion of the first frame portion, and the third frame portion extending rearward from the upper portion of the second frame portion. The travel device is disposed behind the second frame portion of the body frame and below the third frame portion of the body frame.

In the above configuration of the present invention, the pipe-shaped frame is connected to the upper portion of the second frame portion and the front portion of the third frame portion of the body frame, so that the pipe-shaped frame is provided at a relatively high position in the body.

Hereby, in a case where the air enters the vent hole of the pipe-shaped frame (in a case where the air is discharged from the vent hole of the pipe-shaped frame), the air is hardly disturbed by an obstacle on the ground, or the like. This is advantageous to promote heat dissipation from the cooling object and is advantageous to improve the cooling efficiency of the cooling object.

In the present invention, it is preferable that: the work vehicle include a seat frame including a vertical portion along the up-down direction and a longitudinal portion extending rearward from an upper portion of the vertical portion, and a seat attached to the seat frame; the first frame portion be attached to a lower portion of the vertical portion of the seat frame; and the pipe-shaped frame be attached to a rear portion of the longitudinal portion of the seat frame.

In the present invention, in a case where the work vehicle includes the seat frame to which the seat is attached, the vertical portion of the seat frame is attached to the first frame portion of the body frame, and the longitudinal portion of the seat frame is attached to the pipe-shaped frame.

Hereby, the pipe-shaped frame is part of the body and also serves as a member that supports the seat frame to which the seat is attached. This is advantageous for simplification of the structure.

In the present invention, it is preferable that: the pipe-shaped frame include a portion extending upward; and the seat include a backrest attached to the portion of the pipe-shaped frame which portion extends upward.

In the present invention, since the pipe-shaped frame is placed behind the upper portion of the seat frame, the pipe-shaped frame is placed behind a seat base of the seat and below the backrest of the seat.

Hereby, the portion of the pipe-shaped frame extends upward, and the backrest of the seat is effortlessly attached to the portion of the pipe-shaped frame which portion extends upward. This is advantageous for simplification of the structure.

In the present invention, it is preferable that: the cooling fan be provided behind the pipe-shaped frame; the cooling object be provided adjacent to the communicating opening and behind the pipe-shaped frame; and the air enter the pipe-shaped frame via the vent hole, be supplied to the cooling object through the pipe-shaped frame and the communicating opening, and be discharged from the cooling object through the cooling fan.

In the present invention, the cooling fan causes the external air to enter the pipe-shaped frame via the vent hole of the pipe-shaped frame so that the external air is supplied to the cooling object through the pipe-shaped frame and the communicating opening, and the air is then discharged from the cooling fan to behind the seat. Hereby, the air cooling the cooling object hardly flows toward an operator on the seat, thereby making it possible to improve comfortability for the operator.

In the present invention, it is preferable that: the work vehicle include a heat dissipation fin attached to the cooling object; and the heat dissipation fin be disposed at a position facing the communicating opening.

In the present invention, in a case where the heat dissipation fin that promotes heat dissipation is attached to the cooling object, the heat dissipation fin is disposed at a position facing the communicating opening of the pipe-shaped frame. This causes the external air to be directly supplied to the heat dissipation fin at the time when the external air passes through the communicating opening from the vent hole of the pipe-shaped frame and the inside of the pipe-shaped frame. This is advantageous to promote heat dissipation from the cooling object and is advantageous to improve the cooling efficiency of the cooling object.

In the present invention, it is preferable that: the heat dissipation fin be attached to an upper portion of the cooling object; the cooling fan be provided above the heat dissipation fin; and the work vehicle further include a guide plate configured to guide the air rearward which air is discharged from the cooling fan.

In the present invention, in a case where the heat dissipation fin is attached to the upper portion of the cooling object, the cooling fan is provided above the heat dissipation fin, so that the air (the air cooling the cooling object) near the heat dissipation fin is smoothly discharged by the cooling fan. This is advantageous to promote heat dissipation from the cooling object and is advantageous to improve the cooling efficiency of the cooling object.

The air discharged from the cooling fan (the air cooling the cooling object) is guided to rearward by the guide plate, so that the air hardly flows toward the operator on the seat in front of the cooling object. This is advantageous to improve comfortability for the operator.

In the present invention, it is preferable that: the work vehicle include a deck provided behind the seat; and the guide plate guide the air discharged from the cooling fan to below the deck.

In the present invention, in a case where the deck is provided behind the seat, the air discharged from the cooling fan (the air cooling the cooling object) is guided to below the deck by the guide plate, thereby allowing the deck to restrain the air discharged from the cooling fan (the air cooling the cooling object) from flowing upward. This is advantageous to improve comfortability for the operator.

In the present invention, it is preferable that: the work vehicle include a battery provided below the seat and in front of the cooling object, a motor configured to drive the travel device by electric power from the battery, and a heat shielding member provided between the cooling object and the battery; and the heat shielding member have an opening communicating with the communicating opening.

A region below the seat in the work vehicle is a relatively large region. Accordingly, in a case of an electric work vehicle including a battery and a motor, a relatively large battery is easily provided in the region below the seat. When the battery is provided in the region below the seat, the battery is provided in front of the cooling object.

In the present invention, the heat shielding member is provided between the cooling object and the battery, so that heat from the battery can hardly reach the cooling object. This is advantageous to improve the cooling efficiency of the cooling object.

Since the heat shielding member has the opening communicating with the communicating opening of the pipe-shaped frame, the external air enters the pipe-shaped frame via the vent hole of the pipe-shaped frame and is effortlessly supplied to the cooling object through the pipe-shaped frame, the communicating opening of the pipe-shaped frame, and the opening of the heat shielding member. This is advantageous to improve the cooling efficiency of the cooling object.

In the present invention, it is preferable that: the cooling fan be provided behind the pipe-shaped frame; the cooling object be provided adjacent to the communicating opening and behind the pipe-shaped frame; and the air be supplied from the cooling fan to the cooling object, enter the pipe-shaped frame from the cooling object through the communicating opening, and be discharged from the vent hole through the pipe-shaped frame.

In the present invention, the cooling fan causes the external air behind the seat which external air has a relatively low temperature to be supplied to the cooling object, and the external air enters the pipe-shaped frame via the communicating opening of the pipe-shaped frame and passes through the pipe-shaped frame to be discharged from the vent hole of the pipe-shaped frame. This is advantageous to improve the cooling efficiency of the cooling object.

In the present invention, it is preferable that: the work vehicle include a heat dissipation fin attached to the cooling object; and the heat dissipation fin be disposed at a position facing the communicating opening.

In the present invention, in a case where the heat dissipation fin that promotes heat dissipation is attached to the cooling object, the heat dissipation fin is disposed at a position facing the communicating opening of the pipe-shaped frame. This allows the external air to be directly supplied to the heat dissipation fin at the time when the external air passes through the communicating opening of the pipe-shaped frame from the cooling fan. This is advantageous to promote heat dissipation from the cooling object and is advantageous to improve the cooling efficiency of the cooling object.

In the present invention, it is preferable that: the heat dissipation fin be attached to an upper portion of the cooling object; the cooling fan be provided above the heat dissipation fin; and the work vehicle further include a cover covering the cooling fan from above.

In the present invention, in a case where the heat dissipation fin is attached to the upper portion of the cooling object, the cooling fan is provided above the heat dissipation fin, so that the cooling fan allows the air (the air cooling the cooling object) around the heat dissipation fin to be smoothly supplied into the pipe-shaped frame from the communicating opening of the pipe-shaped frame. This is advantageous to promote heat dissipation from the cooling object and is advantageous to improve the cooling efficiency of the cooling object.

The cover covering the cooling fan from above is provided, the cooling fan can hardly receive soil, water, or the like from above, and this is advantageous to protect the cooling fan.

In the present invention, it is preferable that: the work vehicle include a battery provided below the seat and in front of the cooling object, a motor configured to drive the travel device by electric power from the battery, and a heat shielding member provided between the cooling object and the battery; and the heat shielding member have an opening communicating with the communicating opening.

A region below the seat in the work vehicle is a relatively large region, and in a case of an electric work vehicle including a battery and a motor, a relatively large battery is easily provided in the region below the seat. When the battery is provided in the region below the seat, the battery is provided in front of the cooling object.

In the present invention, the heat shielding member is provided between the cooling object and the battery, so that heat from the battery can hardly reach the cooling object. This is advantageous to improve the cooling efficiency of the cooling object.

Since the heat shielding member has the opening communicating with the communicating opening of the pipe-shaped frame, the external air is supplied to the cooling object, enters the pipe-shaped frame via the communicating opening of the pipe-shaped frame and the opening of the heat shielding member, and passes through the pipe-shaped frame to be effortlessly discharged from the vent hole of the pipe-shaped frame. This is advantageous to improve the cooling efficiency of the cooling object.

### BRIEF DESCRIPTION OF THE DRAWINGS

Fig. 1 is a left side view of a work vehicle;
Fig. 2 is a plan view of the work vehicle;
Fig. 3 is a left side view around an inverter;
Fig. 4 is a plan view around the inverter;
Fig. 5 is a left side view of a vertical section around the inverter;
Fig. 6 is a rear view around the inverter; and
Fig. 7 is a front view around the inverter.

### DESCRIPTION OF THE PREFERRED EMBODIMENTS

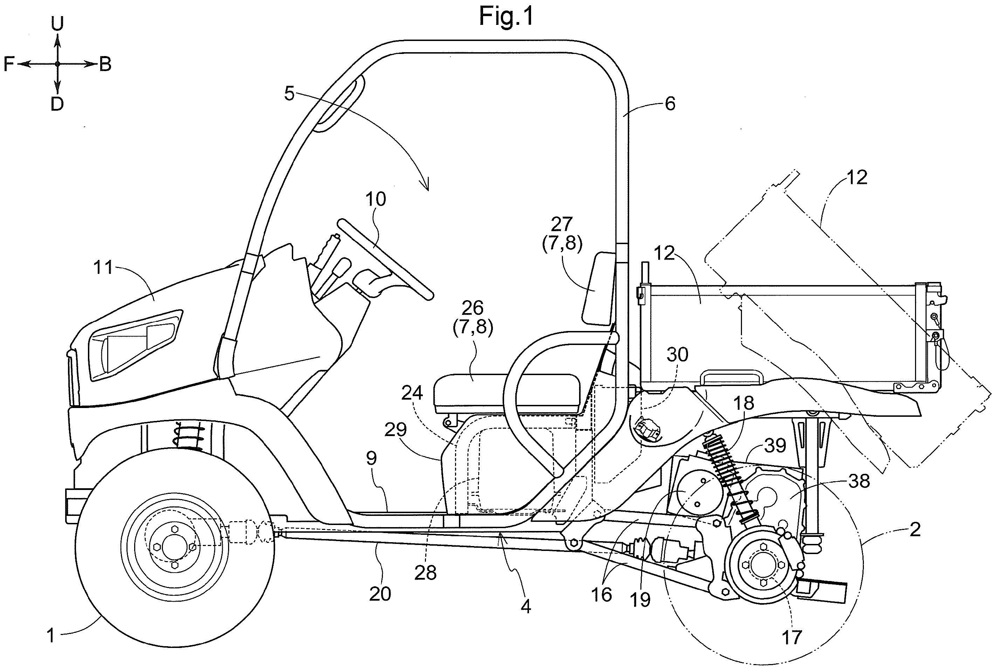

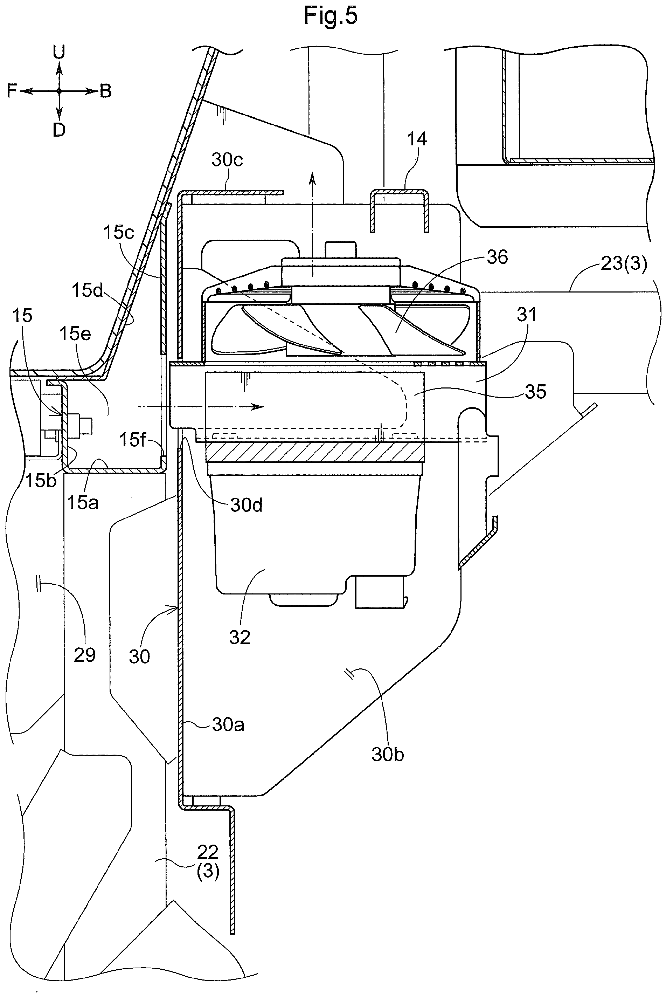

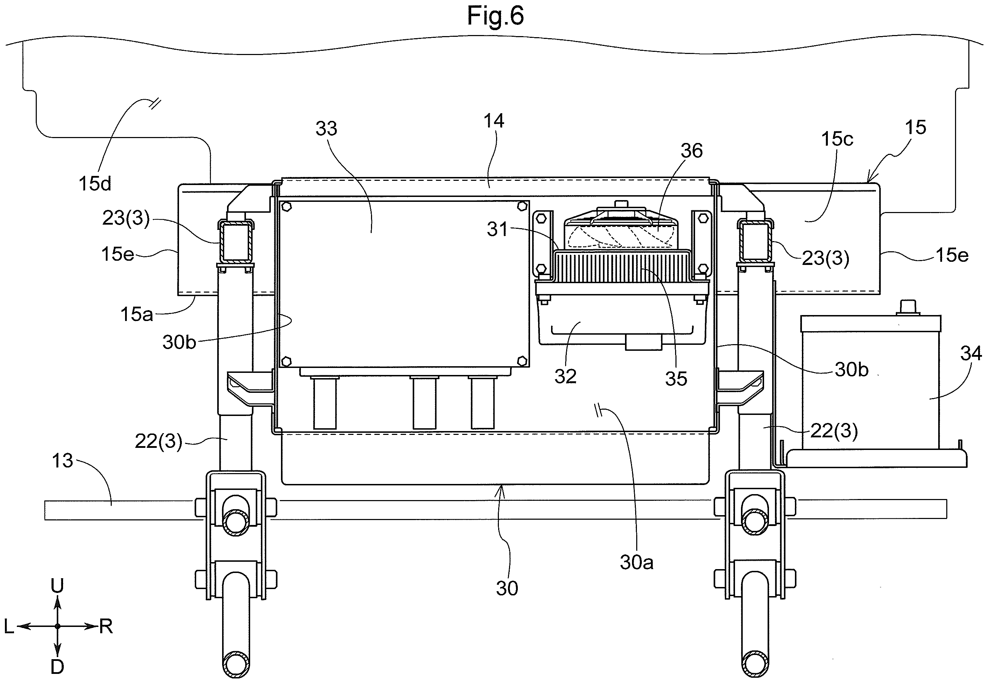

Figs. 1 to 7 illustrates an electric utility work vehicle as an example of a work vehicle. In Figs. 1 to 7, F indicates a front direction, B indicates a rear direction, U indicates an upper direction, D indicates a lower direction, R indicates a right direction, and L indicates a left direction. In the present disclosure, unless indicated otherwise, the relative positioning of the elements are indicated in relation to the front-rear direction or the up-down direction.

### (Overall Configuration of Work Vehicle)

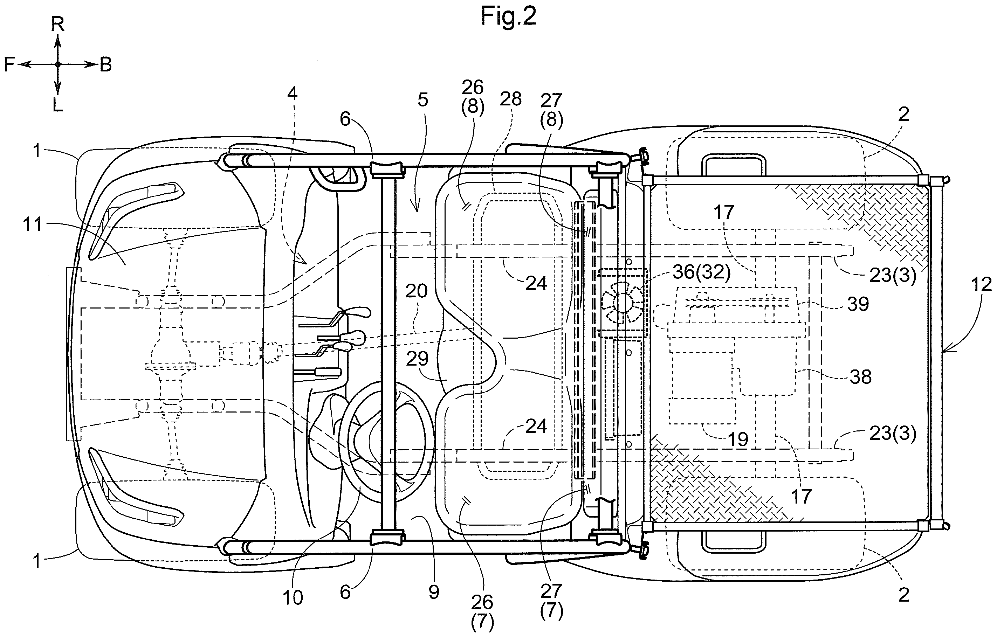

As illustrated in Figs. 1, 2, the work vehicle includes right and left running front wheels 1 (corresponding to a travel device) provided on a front portion of a body 4, and right and left running rear wheels 2 (corresponding to a travel device) provided on a rear portion of the body 4.

The work vehicle includes a boarding section 5 for an operator to ride, and the boarding section 5 is provided in the body 4 between the front wheels 1 and the rear wheels 2 and is surrounded by a ROPS frame 6. The boarding section 5 includes a driver seat 7 (corresponding to a seat), a passenger seat 8 (corresponding to a seat), a floor 9, a control lever 10 for steering the front wheels 1, and so on.

The work vehicle includes a bonnet 11 provided in front of the boarding section 5, and a deck 12 provided behind the boarding section 5. The deck 12 is liftable and lowerable between a use posture indicated by an actual line in Fig. 1 and a dump posture (see a dotted line in Fig. 2) in which a front portion of the deck 12 is lifted with a lower rear portion of the deck 12 being as a fulcrum.

### (Configuration of Body)

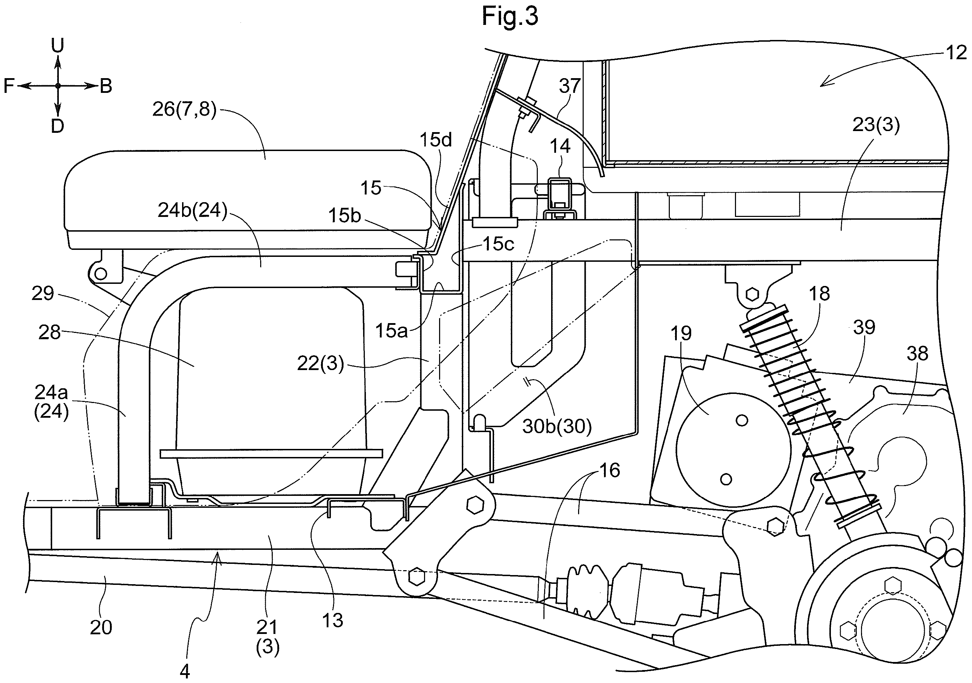

As illustrated in Figs. 2, 3, the body 4 includes right and left body frames 3 along a front-rear direction, and a plurality of lateral frames 13, 14, 15 provided along a right-left direction in such a manner as to be connected to the right and left body frames 3, such that the body frames 3 and the lateral frames 13, 14, 15 constitute part of the body 4.

The body frame 3 includes a first frame portion 21, a second frame portion 22, a third frame portion 23, and so on. The first frame portion 21 is placed below the boarding section 5 (the floor 9) and extends along the front-rear direction. The second frame portion 22 is connected to a rear portion of the first frame portion 21 and extends upward from the rear portion of the first frame 21. The third frame portion 23 is connected to an upper portion of the second frame portion 22 and extends rearward from the upper portion of the second frame portion 22.

The lateral frame 13 is connected to respective rear portions of the right and left first frame portions 21 and extends along the right-left direction. The lateral frame 14 is connected to respective front portions of the right and left third frame portions 23 and extends along the right-left direction.

The lateral frame 15 (corresponding to a pipe-shaped frame) is disposed along the right-left direction. The lateral frame 15 is connected to respective upper portions of the right and left second frame portions 22 and extends along the right-left direction. The lateral frame 15 is connected to respective front portions of the right and left third frame portions 23, and the second frame portions 22 are connected to the third frame portions 23 via the lateral frame 15.

### (Transmission Structure of Front Wheels and Rear Wheels)

As illustrated in Figs. 1, 2, 3, upper and lower links 16 are attached to respective rear portions of the right and left first frame portions 21 in such a manner as to be vertically swingable, and the upper and lower links 16 extend rearward. A transmission case 38 and a rear axle case 17 are connected to the upper and lower links 16, and the rear wheels 2 are attached to right and left sides of the rear axle case 17.

A lateral link (not illustrated) is attached to the left third frame portion 23 and the rear axle case 17. Suspension springs 18 are attached to the right and left third frame portions 23 and the rear axle case 17. Hereby, the rear wheels 2 are disposed behind the second frame portions 22 and below the third frame portions 23 via the links 16 and the suspension springs 18 and are attached to the body 4.

A motor 19 and a continuously variable transmission 39 are attached to an upper portion of the transmission case 38. Power from the motor 19 is transmitted to the rear wheels 2 via the continuously variable transmission 39, and a sub-transmission (not illustrated) and a rear-wheel differential device (not illustrated) provided inside the transmission case 38.

The front wheels 1 are attached to the front portion of the body 4 via a suspension mechanism (not illustrated). Power from between the sub-transmission (not illustrated) and the rear-wheel differential device (not illustrated) is transmitted to the front wheels 1 via a transmission shaft 20 extending forward from the transmission case 38.

### (Configuration of Seat Frame to which Driver Seat and Passenger Seat are Attached)

As illustrated in Figs. 1 to 4, right and left seat frames 24 are provided. The seat frame 24 is formed by bending a square pipe in an L-shape (an angular shape) and includes a vertical portion 24a along the up-down direction, and a longitudinal portion 24b extending rearward from an upper portion of the vertical portion 24a.

A lower portion of the vertical portion 24a of the seat frame 24 is connected to the first frame portion 21 via a bolt, and a rear portion of the longitudinal portion 24b of the seat frame 24 is connected to the lateral frame 15 via a bolt. A seat frame 25 along the right-left direction is connected to respective longitudinal portions 24b of the right and left seat frames 24. The vertical portion 24a of the seat frame 24 is removable from the first frame portion 21, and the longitudinal portion 24b of the seat frame 24 is removable from the lateral frame 15.

One common seat base 26 is provided for the driver seat 7 and the passenger seat 8 and includes a backrest 27 for the driver seat 7 and a backrest 27 for the passenger seat 8. The seat base 26 is attached to the seat frames 24, 25, and the backrests 27 are attached to the lateral frame 15 as will be described later.

### (Configuration of Lateral Frame)

As illustrated in Figs. 3, 4, 5, the lateral frame 15 includes a plurality of plate materials bent and combined with each other. The lateral frame 15 includes a lower portion 15a, a front portion 15b, a rear portion 15c, and an upper portion 15d and is formed into a triangular pipe shape in a sectional view.

In the body frame 3, respective upper portions of the right and left second frame portions 22 are connected to a right portion and a left portion of the lower portion 15a of the lateral frame 15, and respective front portions of the right and left third frame portions 23 are connected to a right portion and a left portion of the rear portion 15c of the lateral frame 15. Respective rear portions of the longitudinal portions 24b of the right and left seat frames 24 are connected to a right portion and a left portion of the front portion 15b of the lateral frame 14.

The rear portion 15c of the lateral frame 15 extends upward relative to the front portion 15b of the lateral frame 15. The upper portion 15d of the lateral frame 15 extends upward to be connected to an upper end of the rear portion 15c of the lateral frame 15 and then extends further upward such that an upper right portion and an upper left portion of the upper portion 15d of the lateral frame 15 are connected to a right portion and a left portion of the ROPS frame 6. The backrest 27 for the driver seat 7 and the backrest 27 for the passenger seat 8 are attached to the upper portion 15d of the lateral frame 15.

In the above configuration, the work vehicle includes the body 4 provided with the travel device (the front wheels 1 and the rear wheels 2), and the boarding section 5 provided in the body 4.

The body 4 includes the right and left body frames 3 provided along the front-rear direction, and the plurality of lateral frames 13, 14, 15 provided along the right-left direction and connected to the right and left body frames 3. A frame (the lateral frame 15) is one of the lateral frames 13, 14, 15.

The body frame 3 includes the first frame portion 21 placed below the boarding section 5, the second frame portion 22 extending upward from the rear portion of the first frame portion 21, and the third frame portion 23 extending rearward from the upper portion of the second frame portion 22.

The travel device (the rear wheel 2) is provided behind the second frame portion 22 and below the third frame 23, as viewed laterally.

The frame (the lateral frame 15) is connected to the upper portion of the second frame portion 22 and the front portion of the third frame portion 23.

The frame (the lateral frame 15) includes a portion (the upper portion 15d) extending upward, and the backrest 27 of the seat (the driver seat 7 and the passenger seat 8) is attached to the portion (the upper portion 15d) of the frame (the lateral frame 15) which portion extends upward.

The work vehicle includes the seat frame 24 including the vertical portion 24a along the up-down direction, and the longitudinal portion 24b extending rearward from the upper portion of the vertical portion 24a, and the seat (the driver seat 7 and the passenger seat 8) attached to the seat frame 24.

In the seat frame 24, the lower portion of the vertical portion 24a is attached to the first frame 21, and the rear portion of the longitudinal portion 24b is attached to the frame (the lateral frame 15).

### (Configuration of Battery)

As illustrated in Figs. 1 to 4, a battery 28 is attached to the rear portion of the first frame portion 21 of the body frame 3 and the lateral frame 13.

The battery 28 is provided between the vertical portion 24a of the seat frame 24 and the second frame portion 22 and between the first frame portion 21 and each of the longitudinal portion 24b of the seat frame 24 and the seat frame 25. The battery 28 has a right end placed laterally outside the right seat frame 24, and a left end placed laterally outside the left seat frame 24.

A battery 34 of 12 V is provided behind a right side of the battery 28 and placed laterally outside the right third frame 23. A cover 29 made of synthetic resin is attached to the seat frame 24 and covers a front portion, the right portion, and a left portion of the battery 28.

### (Configuration of Heat Shielding Member)

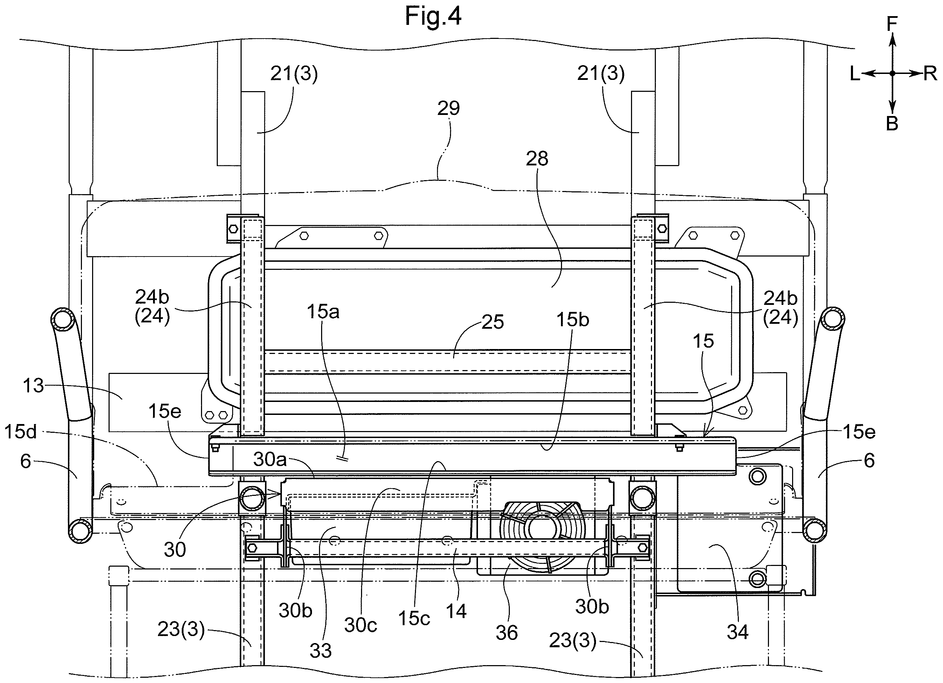

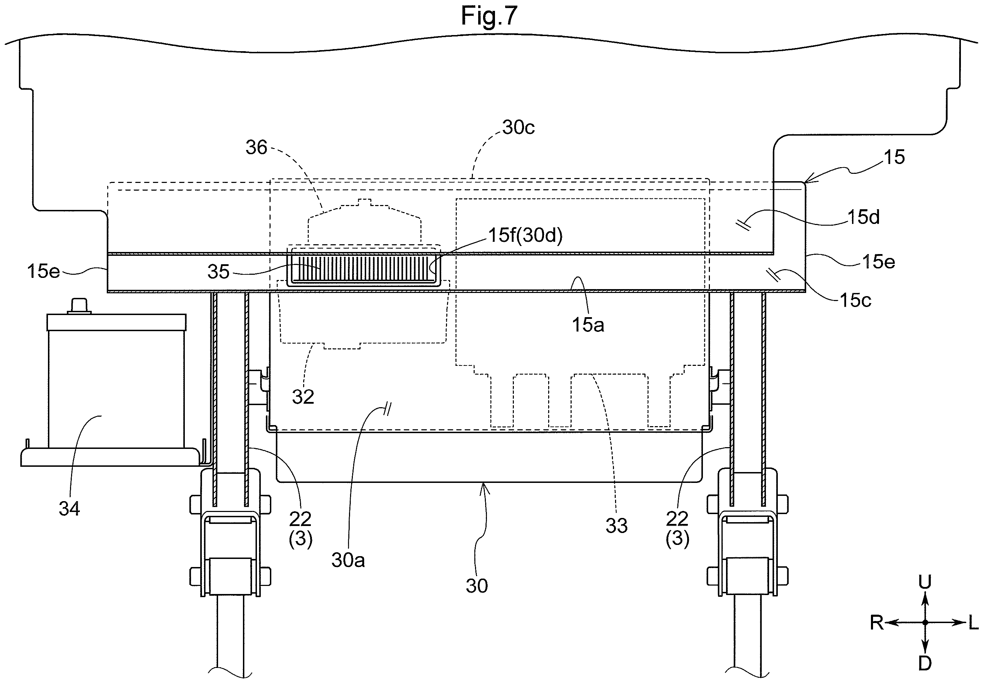

As illustrated in Figs. 4, 7, a heat shielding member 30 is attached to the lateral frame 14 and is provided behind the lateral frame 15 and the battery 28. The heat shielding member 30 is formed by bending a plate material and includes a front portion 30a, right and left lateral portions 30b, and an upper portion 30c.

The front portion 30a of the heat shielding member 30 is formed into a large oblong shape as viewed from the front side. An upper end of the front portion 30a of the heat shielding member 30 is placed at generally the same height as the upper end of the rear portion 15c of the lateral frame 15, and a lower end of the front portion 30a of the heat shielding member 30 is placed at generally the same height as the first frame 21. A right end and a left end of the front portion 30a of the heat shielding member 30 are placed near the right and left second frame portions 22.

The upper portion 30c of the heat shielding member 30 has generally the same width as the front portion 30a of the heat shielding member 30 and extends rearward from the upper end of the front portion 30a of the heat shielding member 30. A gap elongated along the right-left direction is formed between the upper portion 30c of the heat shielding member 30 and the lateral frame 14.

The right and left lateral portions 30b of the heat shielding member 30 are provided over the right end (the left end) of the front portion 30a and the right end (the left end) in the upper portion 30c of the heat shielding member 30.

### (Configuration of Inverter)

As illustrated in Figs. 4, 7, a channel-shaped support member 31 is connected to the right portion of a rear surface of the front portion 30a of the heat shielding member 30. An inverter 32 (corresponding to a cooling object) is attached to the support member 31 and is placed behind the seat base 26 for the passenger seat 8.

A converter 33 is attached to the left portion of the rear surface of the front portion 30a of the heat shielding member 30 and is placed behind the seat base 26 for the driver seat 7.

Electric power of the battery 28 is supplied to the inverter 32, and the inverter 32 converts direct-current power from the battery 28 into alternating-current power and supplies the alternating-current power to the motor 19, so that the motor 19 operates.

The converter 33 converts alternating-current power from an external charger (not illustrated) into direct-current power and supplies the direct-current power to the battery 28.

Electric power of the battery 28 is supplied to a DC-DC converter (not illustrated), and the DC-DC converter lowers the voltage of the electric power to 12 V. The electric power the voltage of which is lowered to 12 V is supplied to the battery 34, and various devices (not illustrated) provided in the work vehicle operates by the electric power of 12 V from the battery 34.

### (Configuration to Cool Inverter)

As illustrated in Figs. 4 to 7, a right end and a left end of the lateral frame 15 are open, so that the right end and the left end of the lateral frame 15 serve as right and left vent holes 15e. The rear portion 15c of the lateral frame 15 has a communicating opening 15f formed behind the seat base 26 for the passenger seat 8. Right and left lateral portions of the cover 29 are placed at positions distanced laterally outwardly from the right and left vent holes 15e of the lateral frame 15.

The front portion 30a of the heat shielding member 30 has an opening 30d having the same size as the communicating opening 15f of the lateral frame 15 and facing the communicating opening 15f of the lateral frame 15. A heat dissipation fin 35 is attached to an upper portion of the inverter 32 and is disposed at a position behind the opening 30d (the communicating opening 15f of the lateral frame 15) of the heat shielding member 30.

A cooling fan 36 is attached to the support member 31. The cooling fan 36 is disposed above the heat dissipation fin 35 and below the gap between the upper portion 30c of the heat shielding member 30 and the lateral frame 14. When the cooling fan 36 is rotated, the cooling fan 36 sucks air near the heat dissipation fin 35 so that the air is discharged upward from the cooling fan 36.

As illustrated in Fig. 3, a flat guide plate 37 (corresponding to a cover) is attached to a rear surface on the upper side of the upper portion 15d of the lateral frame 15. The guide plate 37 has generally the same width as the lateral frame 15 and extends diagonally rearward and downward from the upper portion 15d of the lateral frame 15 to cover the cooling fan 36 from above.

In the above configuration, the work vehicle includes the heat dissipation fin 35 attached to a cooling object (the inverter 32), and the heat dissipation fin 35 is disposed at a position facing the communicating opening 15f.

The heat dissipation fin 35 is attached to the upper portion of the cooling object (the inverter 32), the cooling fan 36 is provided above the heat dissipation fin 35, and the guide plate 37 configured to guide air discharged from the cooling fan 36 to rearward is provided. The cooling fan 36 is covered with a cover (the guide plate 37) from above.

The deck 12 is provided behind the seat (the driver seat 7 and the passenger seat 8), and the guide plate 37 guides the air discharged from the cooling fan 36 to below the deck 12.

The work vehicle includes the battery 28 provided below the seat (the driver seat 7 and the passenger seat 8) and in front of the cooling object (the inverter 32), and the motor 19 configured to drive the travel device (the front wheels 1 and the rear wheels 2) by electric power from the battery 28.

The work vehicle includes the heat shielding member 30 provided between the cooling object (the inverter 32) and the battery 28, and the heat shielding member 30 has the opening 30d communicating with the communicating opening 15f.

### (Flow of Air for Cooling Inverter)

As illustrated in Figs. 4 to 7, air enters the lateral frame 15 via the right and left vent holes 15e of the lateral frame 15 due to the action of the cooling fan 36. In this case, the lateral portions of the cover 29 are placed laterally outwardly from the vent holes 15e of the lateral frame 15, so that mainly air below and behind the vent holes 15e of the lateral frame 15 enters the vent holes 15e of the lateral frame 15.

The air entering the lateral frame 15 via the vent holes 15e of the lateral frame 15 reaches the communicating opening 15f of the lateral frame 15 through the lateral frame 15. After that, the air passes through the communicating opening 15f of the lateral frame 15 and the opening 30d of the heat shielding member 30 and reaches the heat dissipation fin 35. The air reaching the heat dissipation fin 35 removes heat from the heat dissipation fin 35, so that the inverter 32 is cooled off.

The air cooling the inverter 32 is sucked by the cooling fan 36 and is discharged upward from the cooling fan 36 through the gap between the upper portion 30c of the heat shielding member 30 and the lateral frame 14.

The air discharged upward from the cooling fan 36 is guided diagonally rearward and downward by the guide plate 37 and is guided to below the deck 12. Alternatively, the air discharged upward from the cooling fan 36 flows rightward and leftward along the guide plate 37 and is discharge rightward and leftward from between the ROPS frame 6 and the front side of the deck 12.

In the above configuration, the work vehicle includes the cooling object (the inverter 32) and the cooling fan 36.

The work vehicle includes the frame (the lateral frame 15) provided in the body 4 in a pipe shape along the right-left direction and having the vent hole 15e on at least either of the right portion and the left portion of the frame (the lateral frame 15), and the communicating opening 15f provided in an intermediate portion of the frame (the lateral frame 15) in the right-left direction and allowing the cooling fan 36 and the cooling object (the inverter 32) to communicate with the inside of the frame (the lateral frame 15).

The cooling fan 36 causes the air to be supplied to the cooling object (the inverter 32) or discharged from the cooling object (the inverter 32) through the vent hole 15e, the frame (the lateral frame 15), and the communicating opening 15f.

The cooling fan 36 is provided behind the frame (the lateral frame 15).

The cooling object (the inverter 32) is provided adjacent to the communicating opening 15f and behind the frame (the lateral frame 15).

The air enters the frame (the lateral frame 15) via the vent hole 15e, passes through the frame (the lateral frame 15) and the communicating opening 15f, and is supplied to the cooling object (the inverter 32) and discharged from the cooling object (the inverter 32) through the cooling fan 36.

### (First Modification of Invention)

The left end of the lateral frame 15 may be blocked, and only the right vent hole 15e of the lateral frame 15 may be provided. The right end of the lateral frame 15 may be blocked, and only the left vent hole 15e of the lateral frame 15 may be provided.

### (Second Modification of Invention)

The cooling fan 36 may be rotated such that the air above the cooling fan 36 is sucked into the cooling fan 36 and supplied from the cooling fan 36 to the heat dissipation fin 35 below the cooling fan 36.

In the above configuration, the air cooling the inverter 32 (the heat dissipation fin 35) enters the lateral frame 15 via the opening 30d of the heat shielding member 30 and the communicating opening 15f of the lateral frame 15 and is discharged from the vent hole 15e of the lateral frame 15 through the lateral frame 15.

In the above configuration, the cooling fan 36 is provided behind the frame (the lateral frame 15).

The cooling object (the inverter 32) is provided adjacent to the communicating opening 15f and behind the frame (the lateral frame 15).

The air is supplied to the cooling object (the inverter 32) from the cooling fan 36, enters the frame (the lateral frame 15) from the cooling object (the inverter 32) via the communicating opening 15f, and is discharged from the vent hole 15e through the frame (the lateral frame 15).

### (Third Modification of Invention)

The guide plate 37 may be omitted.

In this configuration, the air cooling the inverter 32 is discharged upward from the cooling fan 36 and flows upward through between the upper portion 15d of the lateral frame 15 and the front side of the deck 12.

### (Fourth Modification of Invention)

The support member 31 may include a rear wall portion (not illustrated) in a rear end of the support member 31, and the inverter 32 and the heat dissipation fin 35 in the support member 31 may be isolated from a region for the motor 19 behind the support member 31.

### (Fifth Modification of Invention)

In a case of an electric work vehicle, the battery 28 may be a cooling object instead of the inverter 32, or the motor 19 or a control device (not illustrated) may be a cooling object.

In a case of a work vehicle including an engine (not illustrated) or in a case of a hybrid work vehicle including an engine and a motor (not illustrated), a radiator (not illustrated) or an oil cooler (not illustrated) may be a cooling object.

### (Sixth Modification of Invention)

In the body frame 3, the upper portion of the second frame portion 22 may be directly connected to the front portion of the third frame 23, and the lateral frame 15 may be connected a connecting portion between the upper portion of the second frame portion 22 and the front portion of the third frame 23.

### (Seventh Modification of Invention)

The configuration of the lateral frame 15, the configuration of the heat shielding member 30, the configuration of the inverter 32 and the heat dissipation fin 35, and the configuration of the cooling fan 36 may be applied to the lateral frame 13 or the lateral frame 14 instead of the lateral frame 15.

### (Eighth Modification of Invention)

The body 4 (the boarding section 5) may include the driver seat 7 and the passenger seat 8 on the front portion, and a rear seat (not illustrated) such that the work vehicle is configured as a four-seat work vehicle with two seat rows.

In the above configuration, the battery 28 may be provided below the rear seat, and the configuration of the lateral frame 15, the configuration of the heat shielding member 30, the configuration of the inverter 32 and the heat dissipation fin 35, and the configuration of the cooling fan 36 may be applied to the rear seat.

In a case where the capacity of the battery 28 is insufficient only by providing the battery 28 below the rear seat, the battery 28 may be also provided below the driver seat 7 and the passenger seat 8.

### (Ninth Modification of Invention)

The work vehicle may be configured as a two-rear-wheel drive work vehicle in which power for driving the motor 19 is supplied to the rear wheels 2 but not supplied to the front wheels 1.

Instead of the front wheels 1, a crawler-type travel device (not illustrated) may be provided as a front travel device. Instead of the rear wheels 2, a crawler-type travel device (not illustrated) may be provided as a rear travel device. The front wheels 1 and the rear wheels 2 may be constituted by one crawler-type travel device (not illustrated).

### Industrial Applicability

The present invention is not limited to an electric work vehicle in which a travel device is driven by a motor but is also applicable to a work vehicle in which a travel device is driven by an engine (not illustrated), or a hybrid work vehicle in which a travel device is driven by an engine and a motor.

### Description of the Reference Numerals

- 1: front wheel (travel device)
- 2: rear wheel (travel device)
- 3: body frame
- 4: body
- 5: boarding section
- 7: driver seat (seat)
- 8: passenger seat (seat)
- 12: deck
- 13: lateral frame
- 14: lateral frame
- 15: lateral frame (pipe-shaped frame)
- 15e: vent hole
- 15f: communicating opening
- 19: motor
- 21: first frame portion
- 22: second frame portion
- 23: third frame portion
- 24: seat frame
- 24a: vertical portion
- 24b: longitudinal portion
- 27: backrest
- 28: battery
- 30: heat shielding member
- 30d: opening
- 32: inverter (cooling object)
- 35: heat dissipation fin
- 36: cooling fan
- 37: guide plate (cover)

## Claims

1. A work vehicle, comprising:
a body (4);
a travel device (1, 2) included in the body (4);
a boarding section (5) provided in the body (4);
a cooling object (32);
a cooling fan (36);
a pipe-shaped frame (15) provided in the body (4) along a right-left direction and having a vent hole (15e) on at least either of a right portion and a left portion of the pipe-shaped frame (15); and
a communicating opening (15f) provided in an intermediate portion of the pipe-shaped frame (15) in the right-left direction and allowing the cooling fan (36) and the cooling object (32) to communicate with an inside of the pipe-shaped frame (15),
the cooling fan (36) being configured to cause air to be supplied to the cooling object (32) or discharged from the cooling object (32) through the vent hole (15e), the pipe-shaped frame (15), and the communicating opening (15f).

2. The work vehicle according to claim 1, wherein
the body (4) is provided with
right and left body frames (3) provided along a front-rear direction, and
a plurality of lateral frames (13, 14) provided along the right-left direction and connected to the right and left body frames, and
the pipe-shaped frame (15) is one of the lateral frames.

3. The work vehicle according to claim 2, wherein
the body frames (13, 14) each include
a first frame portion (21) placed below the boarding section (5),
a second frame portion (22) extending upward from a rear portion of the first frame portion (21), and
a third frame portion (23) extending rearward from an upper portion of the second frame portion (22),
the travel device (2) is provided behind the second frame portion (22 and below the third frame portion (23), as viewed laterally in a front-rear direction, and
the pipe-shaped frame (15) is connected to the upper portion of the second frame portion (22) and a front portion of the third frame portion (23).

4. The work vehicle according to claim 3, further comprising:
a seat frame (24) including a vertical portion (24a) along an up-down direction, and a longitudinal portion (24b) extending rearward from an upper portion of the vertical portion (24a); and
a seat (7, 8) attached to the seat frame (24), wherein
the first frame portion (21) is attached to a lower portion of the vertical portion (24a) of the seat frame (24), and
the pipe-shaped frame (15) is attached to a rear portion of the longitudinal portion (24b) of the seat frame (24).

5. The work vehicle according to claim 4, wherein
the pipe-shaped frame (15) includes a portion extending upward, and
the seat (7, 8) includes a backrest (27) attached to the portion of the pipe-shaped frame (15) which portion extends upward.

6. The work vehicle according to claim 4 or 5, wherein
the cooling fan (36) is provided behind the pipe-shaped frame (15),
the cooling object (32) is provided adjacent to the communicating opening (15f) and behind the pipe-shaped frame (15), and
the work vehicle being configured so that the air enters the pipe-shaped frame (15) via the vent hole (15e), is supplied to the cooling object (32) through the pipe-shaped frame (15) and the communicating opening (15f), and is discharged from the cooling object (32) through the cooling fan (36).

7. The work vehicle according to claim 6, further comprising:
a heat dissipation fin (35) attached to the cooling object (32), wherein
the heat dissipation fin (35) is disposed at a position facing the communicating opening (15f).

8. The work vehicle according to claim 7, wherein
the heat dissipation fin (35) is attached to an upper portion of the cooling object (32),
the cooling fan (36) is provided above the heat dissipation fin (35), and
the work vehicle further includes a guide plate (37) configured to guide the air rearward which air is discharged from the cooling fan (36).

9. The work vehicle according to claim 8, further comprising:
a deck (12) provided behind the seat (7, 8), wherein
the guide plate (37) is configured to guide the air discharged from the cooling fan (36) to below the deck (12).

10. The work vehicle according to any one of claims 4 to 9, further comprising:
a battery (28) provided below the seat (7, 8) and in front of the cooling object (32);
a motor (19) configured to drive the travel device (1, 2) by electric power from the battery (28); and
a heat shielding member (30) provided between the cooling object (32) and the battery (28), wherein
the heat shielding member (30) has an opening communicating with the communicating opening (15f).

11. The work vehicle according to any one of claims 4 to 10, wherein the cooling fan (36) is provided behind the pipe-shaped frame (15),
the cooling object (32) is provided adjacent to the communicating opening (15f) and behind the pipe-shaped frame (15), and
the work vehicle being configured so that the air is supplied from the cooling fan (36) to the cooling object (32), enters the pipe-shaped frame (15) from the cooling object (32) through the communicating opening (15f), and is discharged from the vent hole (15e) through the pipe-shaped frame (15).

12. The work vehicle according to claim 11, further comprising:
a heat dissipation fin (35) attached to the cooling object (32), wherein
the heat dissipation fin (35) is disposed at a position facing the communicating opening (15f).

13. The work vehicle according to claim 12, wherein
the heat dissipation fin (35) is attached to an upper portion of the cooling object (32),
the cooling fan (36) is provided above the heat dissipation fin (35), and
the work vehicle further includes a cover (37) covering the cooling fan (36) from above.

14. The work vehicle according to claim 11, further comprising:
a battery (28) provided below the seat (7, 8) and in front of the cooling object (32);
a motor (19) configured to drive the travel device (1, 2) by electric power from the battery (28); and
a heat shielding member (30) provided between the cooling object (32) and the battery (28), wherein
the heat shielding member (30) has an opening communicating with the communicating opening (15f).
